# EUROPEAN PATENT APPLICATION

(11) **EP 4 366 123 A1**
(43) Date of publication of application: **08.05.2024**
(21) Application number: 22904352.6
(22) Date of filing: 07.12.2022
(51) Int. Cl.: H02J 7/02, H01M 10/44, H01M 10/48

(54) **SECONDARY BATTERY CELL VOLTAGE EQUALIZER**

(30) Priority: 07.12.2021 JP 2021209939
(71) Applicant: Minerva Lab Corporation, Tokyo 1730001 (JP)
(72) Inventor: AKUTSU, Hiroyuki, Tokyo 173-0001 (JP)
(74) Representative: Banse & Steglich Patentanwälte PartmbB
(86) International application number: PCT/JP2022/045952
(87) International publication number: WO 2023/106425

(57) **Abstract**

(Task) The voltages of multiple series-connected rechargeable battery cells in a rechargeable battery module must be equalized.

(Solution) An output of power supply is supplied to multiple series-connected rechargeable battery cells to equalize the voltage, charge and discharge using a switched capacitor circuit and a protection circuit.

## Description

### TECHINICAL FIELD OF THE INVENTION

The present invention relates to an equalisation circuit for equalising voltages of series-connected rechargeable battery cells.

Electric storage devices are roughly classified into rechargeable batteries and capacitors. Rechargeable batteries have large capacities, while capacitors have small capacities compared to rechargeable batteries, but can be recharged quickly and have long life in charge/discharge cycle capabilities. The terminal voltages of individual rechargeable battery module in which rechargeable battery cells and capacitors parallelly connected to each rechargeable battery cell must be equalised to ensure safe and efficient charging and discharging capabilities, and voltage equalisation devices are installed in each rechargeable battery cell and capacitor cell in a rechargeable battery module and capacitor module. A cause of voltage imbalance is due to a variety of physical characteristics discrepancies associated with energy storage device degradation, including capacity variation during manufacturing process, capacity decrease variation associated with charge/discharge cycles, internal resistance variation and change, self-discharge variation, connection terminal and wiring resistance, ambient temperature change, and temperature imbalance over storage devices, in addition to capacity variation during manufacturing energy storage devices.

There are many devices that incorporate energy storage devices wherein rechargeable battery modules and capacitor modules are used at the same time. It is desirable to have a circuit that performs voltage equalisation for the rechargeable battery module and capacitor module using the same or similar electronic circuit means.

In some cases, rechargeable battery modules or capacitor modules are connected in series and used as energy storage devices. In this case, not only cell voltage equalisation within each module but also voltage equalisation between modules must be performed. This electronic circuit performs voltage equalisation function over each cell in modules and each module.

### PRIOR ART

Patent Document 1: CN103138314A

Non-Patent Document 1: Capacitor Based Battery Balancing System, Mohamed Daowd, Noshin Omar, Peter Van Den Bossche, Joeri Van Mierlo, World Electric Vehicle Journal Vol. 5 - ISSN 2032-6653 Page 0385-0393

### OUTLINE OF THE INVENTION

### Problem to be solved by the present invention

At the time of charging a rechargeable battery module consisting of multiple rechargeable battery cells connected in series, a power supply for charging is usually connected to the top positive pole and the bottom negative pole of the battery module and supply current for charging thereof. In this case, a voltage equalisation device is connected to prevent voltage imbalance between the rechargeable battery cells.

If the current supplied by the charging power supply in the above configuration exceeds the amount of current that can be redistributed by the voltage equalisation device, the rechargeable battery cell is charged with its maximum rated charging voltage. This will cause damage to the rechargeable battery cell, resulting in reduced capacity and reduced service life.

The above problem is seen in a phenomenon that occurs in both the electronic circuits in the patent document 1 and the non-patent document 1. The problem of exceeding the maximum rated charging voltage applied to the rechargeable battery cell during the charging period is solved in this patent.

We provide a constant voltage constant current power supply for charging rechargeable battery module. The output voltage of the charging power supply is fully charged voltage of one rechargeable battery cell.

The constant-current and constant-voltage charging power supply supplies charging current to all rechargeable battery cells via switched capacitors connected in parallel thereto.

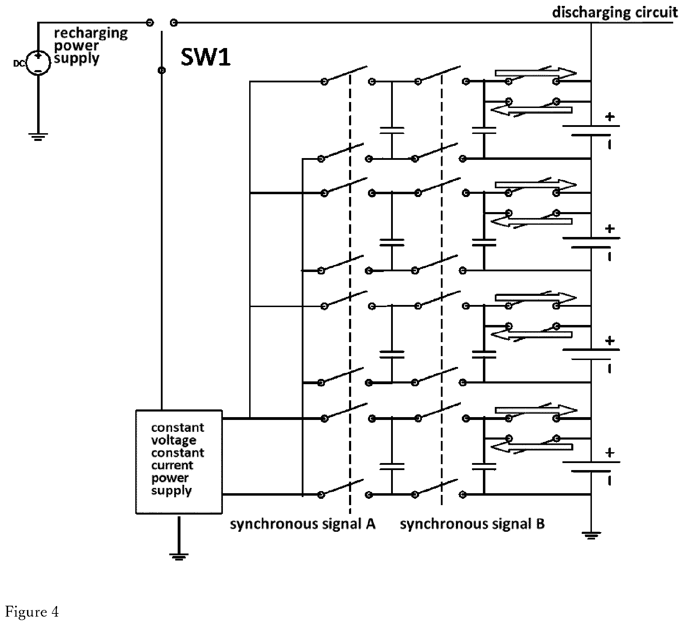

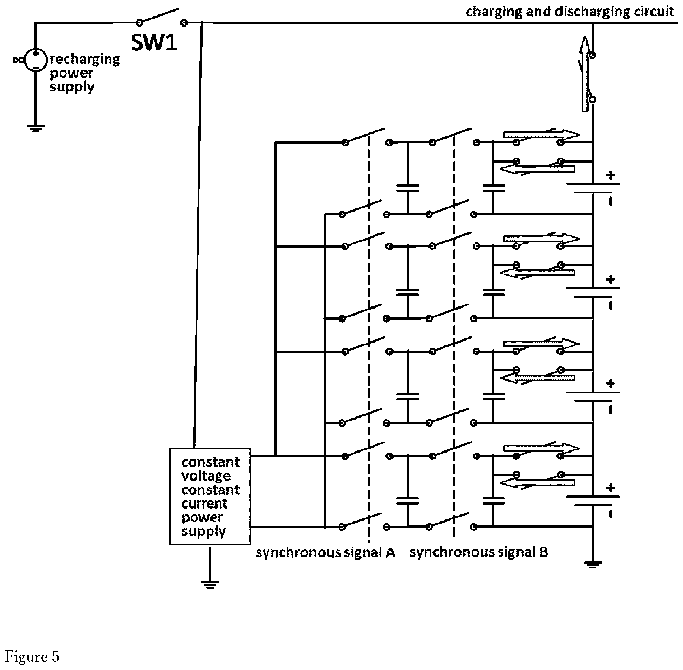

This section describes the cell voltage equalisation operation during charging. SW1 in Fig. 4, Fig. 6, and Fig. 8 is connected to the charging power supply, and SW1 in Fig. 5, Fig. 7, and Fig. 9 is closed so that the charging power supply is connected to a constant current and constant voltage charging power supply to the constant charge voltage constant current circuit.

since the switched capacitors operate automatically and autonomously to reduce the voltage difference between the voltage of all individual rechargeable battery cells or capacitors and the voltage generated by the charging power supply, the voltage of all rechargeable battery cells becomes same as the voltage generated by the charging power supply after sufficient time, and cell charging and cell voltage equalisation are completed.

This section describes cell voltage equalisation during discharge (see Fig. 4). Power is supplied from the discharge circuit to the charging power supply and is discharged while operating in the same manner as charging and equalizing the rechargeable battery cell voltages. As a result, all rechargeable battery cell voltages are equalised during discharge in the same manner as charging.

The operation for the case that the discharge circuit and charge circuit of a rechargeable battery modules share common circuits is as follows. A switch , that detects the direction of the current so that power is not supplied directly from the common circuit to the rechargeable battery modules and that disconnects when it detects charging current that flows directly to the rechargeable battery modules , is inserted into the common charging/discharging circuit. Power is supplied upper stream of the switch to the input of the charging power source. If the discharging circuit and charging circuit for the rechargeable battery modules are separate circuits, the charging circuit is connected to the charging power supply.

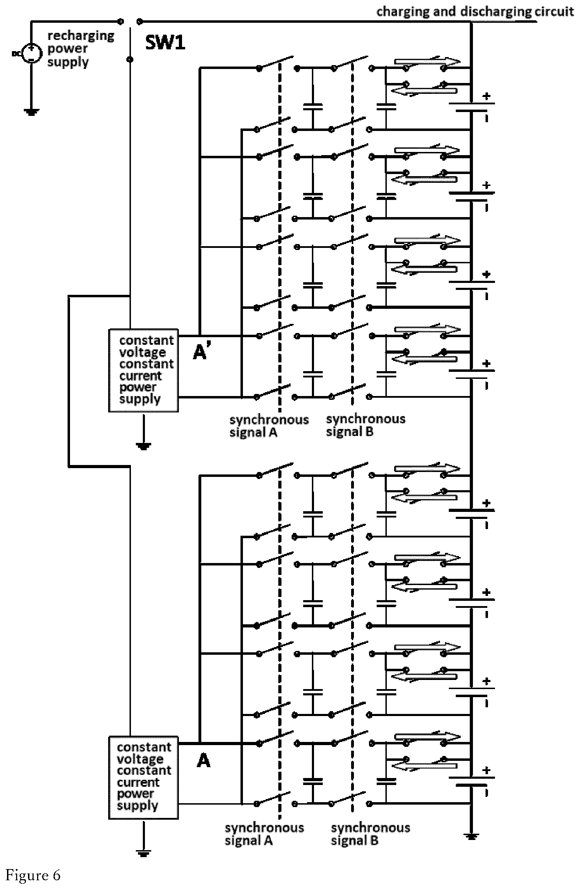

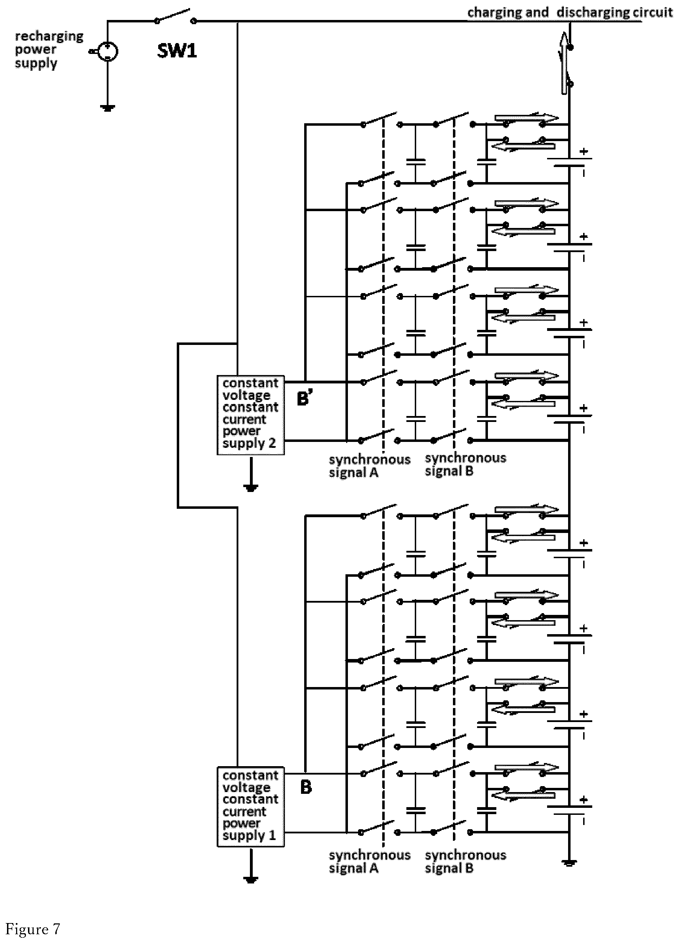

When multiple rechargeable battery modules connected in series are used, the voltages of the rechargeable battery modules must be balanced with each other. This circuit configuration is shown in Figures 6 and 7.

When A and A' in Figure 6 and B and B' in Figure 7 are coupled in a rechargeable battery module series connection circuit when cell equalisation during charging is being performed, constant voltage constant current power supplies 1 and 2 may be operated simultaneously or only one of them may be operated. When A and A' in Figure 6 and B and B' in Figure 7 are not coupled, constant voltage constant current power supplies 1 and 2 must be operating.

In series connection circuits of rechargeable battery modules A and A' in Figure 6 and B and B' in Figure 7 must be coupled when performing cell equalisation during discharge. The constant voltage constant current power supplies 1 and 2 may be operated simultaneously, or either one of them may be operated.

When multiple rechargeable battery modules are used in parallel connection, a switch that conducts only when current is output to all rechargeable battery module output sections shall be provided.

In above case, balancing amongst rechargeable battery modules are supplies may be operated simultaneously, or either one of them may be operated. If not coupled, constant voltage constant current power supply 1 and 2 should both be operated.

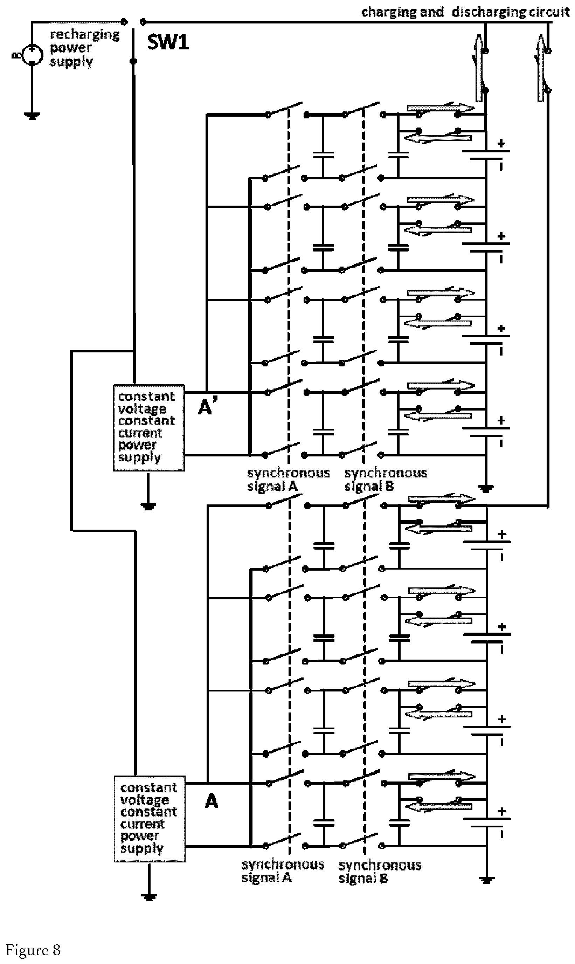

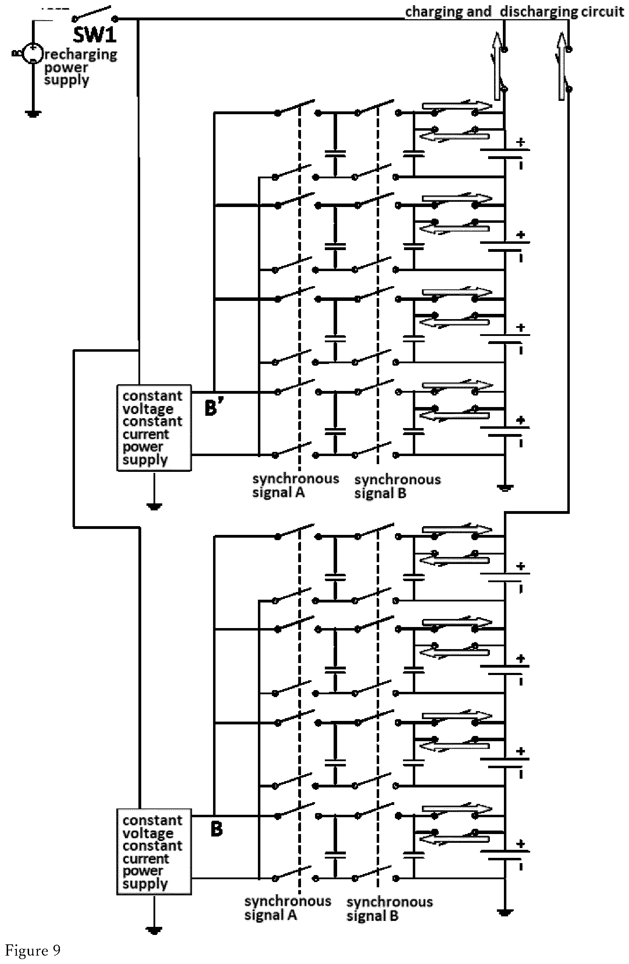

In the case of module-to-module battery cell equalisation during discharge, when combining A and A' in Figure 8 and B and B' in Figure 9, constant voltage constant current power supplies 1 and 2 may be operated simultaneously, or either one of them may be operated. When not coupled, both constant voltage current power supplies 1 and 2 should be operated.

In the case of voltage equalisation by adding a mono-directional current switches that passes the current from the rechargeable battery cell to the switched capacitors as described in claim 5 invention, the current flowing from the rechargeable battery cell with higher voltage to the rechargeable battery cell with lower voltage is added to the current via charging power supply and thereby the rechargeable battery cell that has lower voltage can become sooner high voltage than in the case that the circuit configuration described in claim 5 having no additional circuit and the rechargeable battery cell that has higher voltage can become sooner lower voltage. The mono-directional current switches enable the time for voltage equalisation short.

The over-voltage detection and limiting circuit described in claim 6 operates to prevent high voltage from being applied to the rechargeable battery cells due to charging circuit malfunction, parts failure, wire breakage, short circuit, or interference, and to limit the charging voltage to individual rechargeable battery cells when the charging voltage of each battery cell needs to be changed. In this case, the voltage generated by the charging power supply is the highest charging voltage amongst rechargeable battery cells. If there is no need to change the charging voltage of individual rechargeable battery cells and no need for a circuit to prevent battery cell damages due to a single circuit or system failure, the desired equalisation process can be performed by shorting the input and output without implementing this overvoltage detection and limiting circuits.

Only one of the aforementioned over-voltage detection and limiting circuits may be installed right after the constant voltage constant current circuit for charging and right before the switched capacitors. When other over-voltage detection and limiting circuits are removed, the voltage limiting circuits functions only as a safety device for the charging power supply circuit.

This section describes the current limiting control circuit of claim 1. The current limit must be set to a current value less than or equal to the allowable charging current of the rechargeable battery cells. When the charging power supply is generating a current large enough to charge all the rechargeable battery cells connected in series with a high charging current, if the voltage of one or a few cells is low, due to the nature of a switched capacitor, the charging current may concentrate only on those low voltage cells and exceed the allowable charging current value of those rechargeable battery cells . In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to charging circuit failure, parts failure, wire breakage, short circuit, or mishandling as described above.

The voltage limiting circuits and current limiting circuits described in claim 1 may be either in front of the other in the current flow, or they may be a circuit to limit current and voltage in the same circuit.

The constant voltage constant current power supplies, when equipped with an operation signal input, is appropriately operated or stopped by software control, hardware control, or both. It may be a circuit without an operation signal input.

Circuits of switched capacitors can be appropriately operated or deactivated by software control, hardware control, or both, when the circuits of switched capacitors have operating signal input. The witched capacitor circuits may be circuits that have no operating signal input.

SW1 in Figs. 5, 7, and 9 is not a simple switch, but can be a switching circuit that closes when current flows from the charging power supply to the discharge circuit.

### BRIEF DESCRIPTION OF DRAWINGS

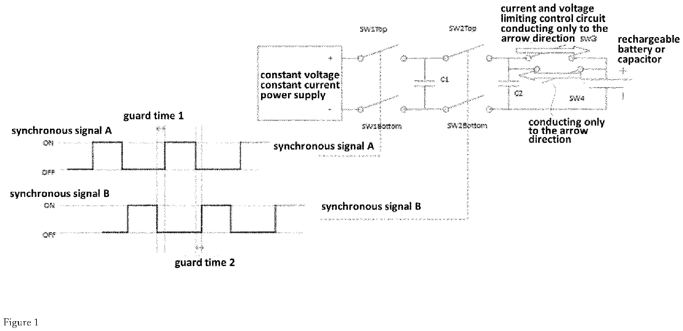

Figure 1 is a schematic illustrating the circuit for each single rechargeable battery cell that comprises a rechargeable battery module.

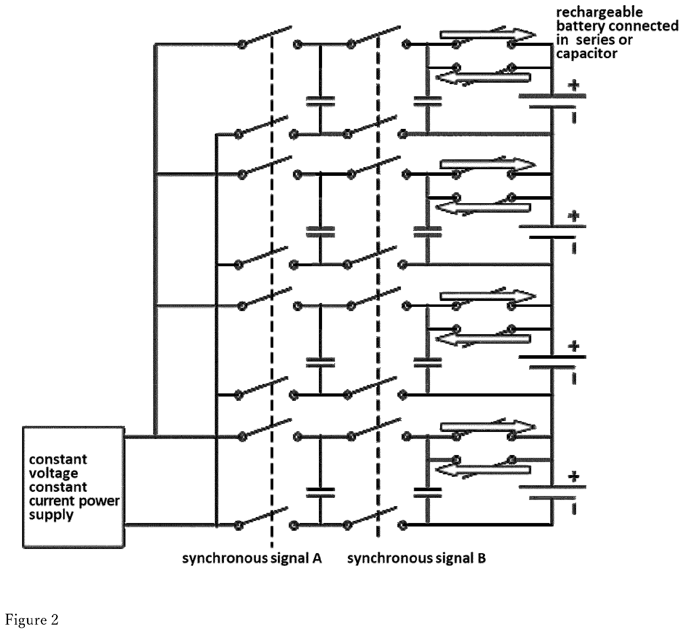

Figure 2 is a schematic illustrating a battery module that consists of four series-connected rechargeable battery cells that share one constant voltage constant current power supply in a rechargeable battery module with a charge pump circuit.

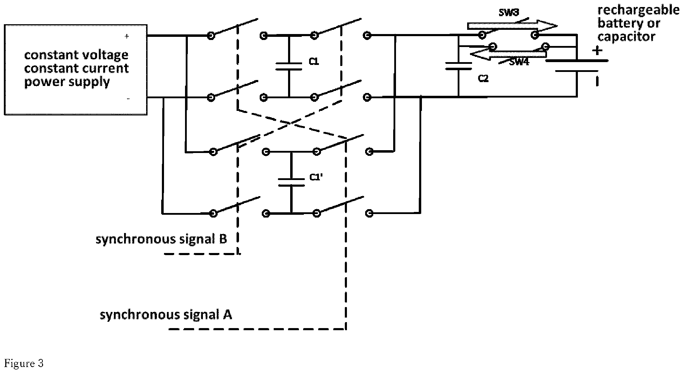

Figure 3 is a schematic illustrating a circuit in which a charge pump circuit is configured with two phases.
Figure 4 is a schematic illustrating a circuit in which a charge circuit and a discharge circuit are separated.
Figure 5 is a schematic illustrating a circuit in which a charge circuit and a discharge circuit are identical.
Figure 6 is a schematic illustrating a circuit in which two rechargeable battery modules are connected in series and charge and discharge circuits are separated.
Figure 7 is a schematic illustrating a circuit in which two rechargeable battery modules are connected in series and charge and discharge circuits are identical.
Figure 8 is a schematic illustrating a circuit in which two rechargeable battery modules are connected in parallel and charge and discharge circuits are separated.
Figure 9 is a schematic illustrating a circuit in which two rechargeable battery modules are connected in parallel and charge and discharge circuits are identical.

### EMBODIMENTS OF THE PRESENT INVENTION

Figure 4 shows a system including one of the rechargeable battery modules and both a charge circuit and a discharge circuit are separately used.

A constant voltage constant current power supply for charging a rechargeable battery module is provided wherein the output voltage is set as fully charged voltage of one rechargeable battery cell.

The entire rechargeable battery modules are charged by supplying charging current to all individual rechargeable battery cells via switched capacitors connected in parallel to this charging power supply.

This section describes the cell voltage equalisation operation during charging. Since the discharge circuit and the charging circuit of the rechargeable battery module are separate ones, the charging circuit is connected to the charging power supply by using SW1.

Since the switched capacitors operate automatically and autonomously to reduce the voltage difference between the voltage of each individual rechargeable battery cell and the voltage generated by the charging power supply, after a sufficient time, the voltage of all rechargeable battery cells becomes the same as the voltage generated by the charging power supply, and equalisation cell charging and cell voltage equalisation are completed.

This section describes the equalisation of cell voltages during discharge, in which SW1 connects the discharging circuit to the charging power supply.

By discharging the rechargeable battery cell in fashion of equalizing voltages while operating in the same manner as charging, all rechargeable battery cell voltages are resultantly equalised in discharging same as in discharge.

In the case of voltage equalisation carried out by adding a mono-directional current switches in the direction passing from the rechargeable battery cell to the switched capacitors as described in claim 5 of configuration, the current flowing from the rechargeable battery cell with high voltage to the rechargeable battery cell with low voltage via the switched capacitors is added to the current via the charging power supply and the cell voltage with low voltage becomes sooner high voltage than in case the circuit configuration has no additional circuit described in claim 5 and the rechargeable battery cell with higher voltage becomes sooner lower voltage, therefore the circuit can reduce the time required for voltage equalisation.

The over-voltage detection and limiting circuits described in claim 6 operate to prevent high voltage from being applied to the rechargeable battery cells due to charging circuit malfunction, parts failure, wire breakage, short circuit, or interference, and to limit the charging voltage to individual battery cells when the charging voltage of each battery cell needs to be changed. In this case, the voltage of the charging power supply becomes the voltage of the highest charging voltage of the rechargeable battery cell. If there is no need to change the charging voltage of individual rechargeable battery cells and no need for a circuit to prevent battery cell damages due to a single circuit or system failure, the desired equalisation process can be performed by shorting the input and output without implementing this overvoltage detection and limiting circuits.

Only one of the aforementioned over-voltage detection and limiting circuits may be installed in between the constant voltage constant current circuit for charging and the switched capacitors. When other over-voltage detection limiting control circuits are removed, the voltage limiting circuit functions only as a safety device for the charging power supply circuit.

This section describes the current and voltage limiting control circuit of claim 1. The current limit must be set to a current value less than or equal to the allowable charging current of the rechargeable battery cells. When the charging power supply is generating a current large enough to charge all the rechargeable battery cells connected in series with a high charging current, if the voltage of one or a few cells is low, due to the nature of a switched capacitors, the charging current may concentrate only on those low voltage cells and exceed the allowable charging current value of those rechargeable battery cells. In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to a charging circuit failure, parts failure, wire breakage, short circuit, or mishandling as described above.

The voltage-limiting circuit and current-limiting circuit described in claim 1 may be either in front of the other in the current flow, or they may be current limiting and voltage limiting control circuits in the same circuit.

The constant voltage constant current power supplies, when equipped with an operation signal input, is operated or stopped according to appropriate conditions by software control, hardware control, or both. It may be a circuit without an operation signal input.

Switched capacitor circuits can be operated or deactivated by software control, hardware control, or both, according to appropriate conditions when having operating signal input. It may be a circuit that has no operating signal input.

This section describes the case wherein one rechargeable battery module is used and the same circuit for charging and discharging are used. The circuit configuration in Figure 5 shows this case.

A constant voltage constant current power supply for charging rechargeable battery module is provided charging wherein the output voltage is set as fully charged voltage of one rechargeable battery cell.

The entire rechargeable battery modules are charged by supplying charging current to all individual rechargeable battery cells via switched capacitors connected in parallel to this charging power supply.

This section describes operation of the cell voltage equalisation during charging. SW1 is closed and power is supplied from the charging power supply to the charging power supply. Since the switched capacitors operate automatically and autonomously to reduce the voltage difference between all individual rechargeable battery cell voltages and the voltage generated by the charging power supply, after a sufficient time, the voltages of all rechargeable battery cells are same as that generated by the charging power supply and then cell charging and cell voltage equalisation are completed.

Cell voltage equalisation during discharge is described in this section.

Opening SW1 to disconnect the charging power supply, the power is supplied from the discharge circuit to the charging power supply and discharge while equalising the voltages of the rechargeable battery cells in same way as during charging. This ensures that all voltages of rechargeable battery cells are same during discharge, same as during charging.

Since the discharging circuit and the charging circuit are commonly used for rechargeable battery modules, a switch , that shuts off a circuit when charging current directly flowing to the rechargeable battery modules are detected for the purpose that power is not supplied to the rechargeable battery modules directly from such commonly used circuit as the discharging circuits and the charging circuit, inserted in the charging and discharging common circuit . Power is supplied from the upstream of this switch to the charging power input.

In the case of voltage equalisation by adding a mono-directional current switches in the direction of current passage from the rechargeable battery as claimed in claim 5 to the switched capacitor, the current flowing from the rechargeable battery cell with high voltage to the rechargeable battery cell with low voltage via the switched capacitors adds to the current via the power supply for charging, and the cell voltage with low voltage becomes sooner high voltage than the rechargeable battery configured than a circuit which has additional circuit as claimed in claim 5, so that the time necessary for voltage equalisation can be shortened.

The over-voltage detection and limiting circuits described in claim 6 can operate to prevent high voltage to the rechargeable battery cells due to charging circuit malfunction, parts failure, wire breakage, short circuit, or interference, and to limit the charging voltage to individual rechargeable battery cells when the charging voltage of each battery cell needs to be changed. In this case, the voltage generated by the charging power supply is the highest charging voltage amongst rechargeable battery cells. When there is no need to change the charging voltage of individual rechargeable battery cells and no need for a circuit to prevent battery cell damages due to a single circuit or system failure, the desired equalisation process can be performed by shorting the input and output without implementing this over-voltage detection and limiting circuits.

Only one of the over-voltage detection and limiting circuits may be installed in between the over-voltage detection limiting control circuits for charging and the switched capacitors. If other overvoltage detection limiting circuits are removed, the voltage limiting circuit functions only as a safety device for the charging power supply circuit.

This section describes the current and voltage limiting control g circuit of claim 1. The current limit must be set to a current value less than or equal to the allowable charging current of the rechargeable battery cells. When the charging power supply is generating a current large enough to charge all the rechargeable battery cells connected in series with a high charging current, if the voltage of one or a few cells is low, due to the nature of switched capacitors, the charging current may concentrate only on those low voltage cells and exceed the allowable charging current value of those rechargeable battery cells . In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to a charging circuit failure, parts failure, wire breakage, short circuit, or mishandling as described above.

The voltage-limiting circuit and current-limiting circuits described in claim 1 may be either in front of the other in the current flow, or they may be current limiting and voltage limiting control circuits in the same circuit.

The constant voltage constant current power supply , when equipped with an operation signal input, is operated or stopped according to appropriate conditions by software control, hardware control, or both. It may be a circuit without an operation signal input.

Switched capacitor circuits can be operated or deactivated by software control, hardware control or both, according to appropriate conditions when having operating signal input. It may be a circuit that has no operating signal input.

This section describes the case wherein two rechargeable battery modules in series connection are used and separated circuits for charging and discharging are used. The circuit configuration in Figure 6 shows this case.

A constant voltage constant current power supply for charging rechargeable battery module is provided wherein the output voltage is set as fully charged voltage of one rechargeable battery cell.

The entire rechargeable battery modules are charged by supplying charging current to all individual rechargeable battery cells via switched capacitors connected in parallel to the charging power supplies.

This section describes operation of the cell voltage equalization operation during charging. Since the discharge circuit and the charging circuit of the rechargeable battery module are separate ones, the charging circuit is connected to the charging power supplies by using SW1.

Since the switched capacitors operates automatically and autonomously to reduce the voltage difference between the voltage of each individual rechargeable battery cell and the voltage generated by the charging power supplies, after a sufficient time, the voltage of all rechargeable battery cells becomes the same as the voltage generated by the charging power supply, and equalisation cell charging and cell voltage equalisation are completed.

This section describes the equalisation of cell voltages during discharge, in which SW1 connects the discharging circuit to the charging power supply.

By discharges the rechargeable battery cell in fashion of equalizing voltages while operating in the same manner as charging, then all rechargeable battery cell voltages are equalised in discharging same as in charging as the result of the discharging.

In case that A and A' in Figure 6 are coupled when performing cell equalization during charging in a rechargeable battery modules of series connection circuit, constant voltage constant current power supplies 1 and 2 may be operated simultaneously, or only one of them may be operated. In case that A and A' in Figure 6 are not coupled, constant voltage constant current power supplies 1 and 2 must be operating.

In a rechargeable battery modules series connection circuit, A and A' in Figure 6 must be coupled when performing cell equalisation during discharge. The constant voltage constant current power supplies 1 and 2 may be operated simultaneously, or either one of them may be operated.

In the case of voltage equalisation by adding mono-directional current switches that pass the current from the rechargeable battery cells to the switched capacitors as described in claim 5 invention, the current flowing from the rechargeable battery cell with higher voltage to the rechargeable battery cell with lower voltage is added to the current via charging power supply and thereby the rechargeable battery cell that has lower voltage can become sooner high voltage than in the case that the circuit configuration described in claim 5 having no additional circuit and the rechargeable battery cell that has higher voltage can become sooner lower voltage. The mono-directional current switchenable the time for voltage equalisation short.

The over-voltage detection and limiting circuits described in claim 6 operates to prevent high voltage from being applied to the rechargeable battery cells due to charging circuit malfunction, parts failure, wire breakage, short circuit, or interference, and to limit the charging voltage to individual rechargeable battery cells when the charging voltage of each battery cell needs to be changed. In this case, the voltage generated by the charging power supply is the highest charging voltage amongst rechargeable battery cells. If there is no need to change the charging voltage of individual rechargeable battery cells and no need for a circuit to prevent battery cell damages due to a single circuit or system failure, the desired equalisation process can be performed by shorting the input and output without implementing the over-voltage detection and limiting circuits.

Only one of the aforementioned over-voltage detection and limiting circuits may be installed right after the constant voltage constant current circuit for charging and right before the switched capacitors. When other over-voltage detection limiting control circuits are removed, the voltage limiting circuit functions only as a safety device for the charging power supply circuit.

This section describes the current limiting control circuits of claim 1. The current limit must be set to a current value less than or equal to the allowable charging current of the rechargeable battery cells. When the charging power supplies are generating a current large enough to charge all the rechargeable battery cells connected in series with a high charging current, if the voltage of one or a few cells is low, due to the nature of switched capacitors, the charging current may concentrate only on those low voltage cells and exceed the allowable charging current value of those rechargeable battery cells . In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to a charging circuit failure, parts failure, wire breakage, short circuit, or mishandling as described above.

The voltage-limiting circuit and current-limiting circuit described in claim 1 may be either in front of the other in the current flow, or they may be current limiting and voltage limiting control circuits in the same circuit.

The constant voltage constant current power supply, when equipped with an operation signal input, is operated or stopped according to appropriate conditions by software control, hardware control, or both. It may be a circuit without an operation signal input.

Switched capacitor circuits can be operated or deactivated by software control, hardware control, or both, according to appropriate conditions when having operating signal input. It may be a circuit that has no operating signal input.

This section describes the case wherein two rechargeable battery modules in series connection are used and the circuits for charging and discharging are same. The circuit configuration in Figure 7 shows this case.

Constant voltage constant current power supplies for charging rechargeable battery modules are provided wherein the output voltage is set as fully charged voltage of one rechargeable battery cell.

The entire rechargeable battery modules charged by supplying charging current to all individual rechargeable battery cells via switched capacitors connected in parallel to this charging power supply.

This section describes operation of the cell voltage equalisation during charging. SW1 is closed and power is supplied from the charging power supply to the charging power supply circuit.

Since the switched capacitors operate automatically and autonomously to reduce the voltage difference between the voltage of each individual rechargeable battery cell and the voltage generated by the charging power supplies, after a sufficient time, the voltage of all rechargeable battery cells becomes same as the voltage generated by the charging power supplies , and equalisation cell charging and cell voltage equalisation are completed.

This section describes the equalisation of cell voltages during discharge, in which SW1 opens, power being supplied to the rechargeable battery from a discharging circuit to the power supplies for charging, discharges the rechargeable battery cell in a fashion of equalizing voltages while operating in the same manner as charging. As a result, all rechargeable battery cell voltages are equalised in discharging same as in charging.

Since the discharging circuit and the charging circuits are commonly used for rechargeable battery, a switch that shuts off a circuit when charging current directly flowing to the rechargeable battery modules is detected for the purpose that power is not supplied to the rechargeable batteries directly from such commonly used circuit as the discharging circuits and the charging circuit is inserted in the charging and discharging common circuit. Power is supplied from the upstream of the switch to the input of the charging power supplies.

When using multiple rechargeable battery modules connected in series, the voltages of the rechargeable battery modules must be balanced with each other.

When B and B' in Figure 7 are coupled in rechargeable battery modules connected in a series circuit when performing cell equalisation during charging, constant voltage constant current power supplies 1 and 2 may be operated simultaneously or only one of them may be operated. When B and B' in Figure 7 are not coupled, constant voltage constant current power supplies 1 and 2 must be operating.

B and B' in Figure 7 must be coupled when performing cell equalisation during discharge. The constant voltage constant current power supplies 1 and 2 may be operated simultaneously, or either one of them may be operated.

In the case of voltage equalisation by adding mono-directional current switches that pass the current from the rechargeable battery cell to the switched capacitors as described in claim 5 invention, the current flowing from the rechargeable battery cell with higher voltage to the rechargeable battery cell with lower voltage is added to the current via charging power supply and thereby the rechargeable battery cell that has lower voltage can become sooner high voltage than in the case that the circuit configuration described in claim 5 having no additional circuit and the rechargeable battery cell that has higher voltage can become sooner lower voltage. The mono-directional current switchenable the time for voltage equalisation short.

The over-voltage detection and limiting circuits described in claim 6 operates to prevent high voltage from being applied to the rechargeable battery cells due to charging circuit malfunction, parts failure, wire breakage, short circuit, or interference, and to limit the charging voltage to individual rechargeable battery cells when the charging voltage of each battery cell needs to be changed. In this case, the voltage generated by the charging power supply is the highest charging voltage amongst rechargeable battery cells. If there is no need to change the charging voltage of individual rechargeable battery cells and no need for a circuit to prevent battery cell damages due to a single circuit or system failure, the desired equalisation process can be performed by shorting the input and output without implementing this overvoltage detection and limiting circuits.

Only one of the aforementioned over-voltage detection and limiting circuits may be installed in between the constant voltage constant current circuit for charging and the switched capacitors. When other over-voltage detection limiting control circuits are removed, the voltage limiting circuit functions only as a safety device for the charging power supply circuit.

This section describes the current limiting control circuit of claim 1. The current limit must be set to a current value less than or equal to the allowable charging current of the rechargeable battery cells. When the charging power supplies are generating a current large enough to charge all the rechargeable battery cells connected in series with a high charging current, if the voltage of one or a few cells is low, due to the nature of a switched capacitors, the charging current may concentrate only on those low voltage cells and exceed the allowable charging current value of those rechargeable battery cells. In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to a charging circuit failure, parts failure, wire breakage, short circuit, or mishandling as described above.

The voltage-limiting circuit and current-limiting circuit described in claim 1 may be either in front of the other in the current flow, or they may be current limiting and voltage limiting control circuits in the same circuit.

The constant voltage constant current power supply, when equipped with an operation signal input, is operated or stopped according to appropriate conditions by software control, hardware control, or both. It may be a circuit without an operation signal input.

Switched capacitor circuits can be operated or deactivated by software control, hardware control, or both, according to appropriate conditions when having operating signal input. It may be a circuit that has no operating signal input.

Figure 8 describes a circuit in which two rechargeable battery modules are connected in parallel and the charge and discharge circuits are separated.

Constant voltage constant current power supplies for charging rechargeable battery module is provided with the output voltage being fully charged voltage of one rechargeable battery cell.

The entire rechargeable battery modules are charged by supplying charging current to all individual rechargeable battery cells via switched capacitors connected in parallel to this charging power supply.

This section describes operation of the cell voltage equalization operation during charging. Since the discharge circuit and the charging circuit of the rechargeable battery module are separate ones, the charging circuit is connected to the charging power supply by using SW1.

Since the switched capacitors operates automatically and autonomously to reduce the voltage difference between the voltage of each individual rechargeable battery cell and the voltage generated by the charging power supplies , after a sufficient time, the voltage of all rechargeable battery cells becomes the same as the voltage generated by the charging power supplies , and equalisation cell charging and cell voltage equalisation are completed.

This section describes the equalisation of cell voltages during discharge, in which SW1 connects a discharging circuit to the power supplies for charging.

By discharges the rechargeable battery cell in fashion of equalizing voltages while operating in the same manner as charging, all rechargeable battery cell voltages are equalised in discharging same as in charging, as the result of the discharging

When multiple rechargeable battery modules are used in parallel connection, switches that conducts only when current is output to all rechargeable battery module output sections shall be provided.

In above case, balancing amongst rechargeable battery modules are not necessary. However, if there is a need to ensure that the lifetime, or device degradation, of battery modules operating in parallel is required as uniform as possible, then module-to-module cell equalisation should be carried out to equalise the current load on each module. If inhibition or degradation of rechargeable battery modules is not a consideration, module-to-module cell equalisation may not be executed.

In above case, balancing amongst rechargeable battery modules are not necessary. However, if there is a need to ensure that the lifetime, or device degradation, of battery modules operating in parallel is required as uniform as possible, then module-to-module cell equalisation should be carried out to equalise the current load on each module. If inhibition or degradation of rechargeable battery modules is not a consideration, module-to-module cell equalisation may not be executed.

When performing module-to-module battery cell equalisation during charging, A and A' in Figure 8 may or may not be coupled. When A and A' in Figure 8 are coupled, constant voltage constant current power 1 and 2 may be operated simultaneously, or either one of them may be operated. If not coupled, constant voltage constant current power 1 and 2 should both be operated.

In the case of voltage equalization by adding mono-directional current switches that passes the current from the rechargeable battery cell to the switched capacitors as described in claim 5 invention, the current flowing from the rechargeable battery cell with higher voltage to the rechargeable battery cell with lower voltage is added to the current via charging power supply and thereby the rechargeable battery cell that has lower voltage can become sooner high voltage than in the case that the circuit configuration described in claim 5 having no additional circuit and the rechargeable battery cell that has higher voltage can become sooner lower voltage. The mono-directional current switchenable the time for voltage equalization short.

The over-voltage detection and limiting circuits described in claim 6 operates to prevent high voltage from being applied to the rechargeable battery cells due to charging circuit malfunction, parts failure, wire breakage, short circuit, or interference, and to limit the charging voltage to individual rechargeable battery cells when the charging voltage of each battery cell needs to be changed. In this case, the voltage generated by the charging power supply is the highest charging voltage amongst rechargeable battery cells. If there is no need to change the charging voltage of individual rechargeable battery cells and no need for a circuit to prevent battery cell damages due to a single circuit or system failure, the desired equalization process can be performed by shorting the input and output without implementing the overvoltage detection and limiting circuits .

Only one of the aforementioned over-voltage detection and limiting circuits may be installed right after the constant voltage constant current circuit for charging and right before the switched capacitors. When other over-voltage detection limiting control circuits are removed, the voltage limiting circuit functions only as a safety device for the charging power supply circuit.

This section describes the current limiting control circuit of claim 1. The current limit must be set to a current value less than or equal to the allowable charging current of the rechargeable battery cells. When the charging power supplies are generating a current large enough to charge all the rechargeable battery cells connected in series with a high charging current, if the voltage of one or a few cells is low, due to the nature of a switched capacitors, the charging current may concentrate only on those low voltage cells and exceed the allowable charging current value of those rechargeable battery cells. In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to a charging circuit failure, parts failure, wire breakage, short circuit, or mishandling as described above.

The voltage-limiting circuits and current-limiting circuits described in claim 1 may be either in front of the other in the current flow, or they may be current limiting and voltage limiting control circuits in the same circuit.

The constant voltage constant current power supply, when equipped with an operation signal input, is operated or stopped according to appropriate conditions by software control, hardware control, or both. It may be a circuit without an operation signal input.

Switched capacitor circuits can be operated or deactivated by software control, hardware control, or both, according to appropriate conditions when having operating signal input. It may be a circuit that has no operating signal input.

Figure 9 describes a circuit in which two rechargeable battery modules are connected in parallel and the charge and discharge circuits are separated.

A constant voltage constant current power supplies for charging rechargeable battery module is provided with the output voltage being fully charged voltage of one rechargeable battery cell.

The entire rechargeable battery module is charged by supplying charging current to all individual rechargeable battery cells via switched capacitors connected in parallel to this charging power supply.

This section describes operation of the cell voltage equalization during charging. SW1 is closed and power is supplied from the charging power supplies to the charging power supply circuit.

Since the switched capacitors operate automatically and autonomously to reduce the voltage difference between the voltage of each individual rechargeable battery cell and the voltage generated by the charging power supplies, after a sufficient time, the voltage of all rechargeable battery cells becomes the same as the voltage generated by the charging power supplies, and equalization cell charging and cell voltage equalization are completed.

This section describes the equalization of cell voltages during discharge, in which power being supplied to the rechargeable battery from the discharging circuit to the power supply for charging, discharges the rechargeable battery cell in fashion of equalizing voltages while operating in the same manner as charging. As a result, all rechargeable battery cell voltages are equalized in discharging same as in charging.

In case that the discharging circuit and the charging circuits are commonly used for rechargeable battery modules are common, switches, that shuts off a circuit when charging current directly flowing to the rechargeable battery modules is detected for the purpose that power is not supplied to the rechargeable battery directly from such commonly used circuit as the discharging circuit and the charging circuits, is inserted in the charging and discharging common circuit. Power is supplied from the upstream of the switches to the charging power input.

When multiple rechargeable battery modules are used in parallel connection, switches that conduct only when current is output to all rechargeable battery modules output sections shall be provided.

In above case, balancing amongst rechargeable battery modules are not necessary. However, if there is a need to ensure that the lifetime, or device degradation, of battery modules operating in parallel is required as uniform as possible, then module-to-module cell equalization should be carried out to equalize the current load on each module. If inhibition or degradation of rechargeable battery modules is not a consideration, module-to-module cell equalization may not be executed.

When performing module-to-module battery cell equalization during charging, B and B' in Figure 9 may or may not be coupled. When B and B' in Figure 9 are coupled, constant voltage constant current power supplies 1 and 2 may be operated simultaneously, or either one of them may be operated. If not coupled, constant voltage constant current power 1 and 2 should both be operated.

In the case of voltage equalisation by adding a mono-directional current switches that passes the current from the rechargeable battery cell to the switched capacitors as described in claim 5 invention, the current flowing from the rechargeable battery cell with higher voltage to the rechargeable battery cell with lower voltage is added to the current via charging power supply and thereby the rechargeable battery cell that has lower voltage can become sooner high voltage than in the case that the circuit configuration described in claim 5 having no additional circuit and the rechargeable battery cell that has higher voltage can become sooner lower voltage. The mono-directional current switches enable the time for voltage equalisation short.

The over-voltage detection and limiting circuits described in claim 6 operates to prevent high voltage from being applied to the rechargeable battery cells due to charging circuit malfunction, parts failure, wire breakage, short circuit, or interference, and to limit the charging voltage to individual rechargeable battery cells when the charging voltage of each battery cell needs to be changed. In this case, the voltage generated by the charging power supply is the highest charging voltage amongst rechargeable battery cells. If there is no need to change the charging voltage of individual rechargeable battery cells and no need for a circuit to prevent battery cell damages due to a single circuit or system failure, the desired equalisation process can be performed by shorting the input and output without implementing the over-voltage detection and limiting circuits .

Only one of the aforementioned over-voltage detection and limiting circuits may be installed in between the constant voltage constant current circuit for charging and the switched capacitors. When other over-voltage detection limiting control circuits are removed, the voltage limiting circuit functions only as a safety device for the charging power supply circuits.

This section describes the current limiting control circuit of claim 1. The current limit must be set to a current value less than or equal to the allowable charging current of the rechargeable battery cells. When the charging power supply is generating a current large enough to charge all the rechargeable battery cells connected in series with a high charging current, if the voltage of one or a few cells is low, due to the nature of switched capacitors , the charging current may concentrate only on those low voltage cells and exceed the allowable charging current value of those rechargeable battery cells . In order to prevent this, a current and voltage limiting control circuit is necessary. However, this circuit can be removed only when the charging current does not exceed the allowable charging current of the rechargeable battery cell under any circumstances. This circuit also serves as a safety circuit to prevent excessive charging current due to a charging circuit failure, parts failure, wire breakage, short circuit, or mishandling as described above.

The voltage-limiting circuit and current-limiting circuit described in claim 1 may be either in front of the other in the current flow, or they may be current limiting and voltage limiting control circuits in the same circuit.

The constant voltage constant current power supply, when equipped with an operation signal input, is operated or stopped according to appropriate conditions by software control, hardware control, or both. It may be a circuit without an operation signal input.

Switched capacitor circuits can be operated or deactivated by software control, hardware control, or both, according to appropriate conditions when having operating signal input. It may be a circuit that has no operating signal input.

A circuit in which more than three rechargeable battery modules are connected in parallel and the charge and discharge circuits are separated.

By considering two series-connected modules as one module and adding one more module to it, the circuit can be made similar to a module with two series-connected modules.

This section describes a case in which three or more rechargeable battery modules are connected in series and the charge circuit and discharge circuit are the same circuit.

Regarding two series-connected modules as one module, the three series-connected rechargeable battery modules can be the same circuit as that of two series-connected modules.

This section describes a circuit in which three or more rechargeable battery modules are connected in parallel and the charge and discharge circuits are separated.

Regarding as two modules connected in parallel as one module, three rechargeable battery modules connected in parallel can be the same circuit as that of two rechargeable battery modules connected in parallel where one is two modules connected in parallel and the other one is a single module.

This section describes a circuit in which three or more rechargeable battery modules are connected in parallel and the charge and discharge circuits are separated.

Regarding as two modules connected in parallel as one module, three rechargeable battery modules connected in parallel can be the same circuit as that of two rechargeable battery modules connected in parallel where one is two modules connected in parallel and the other one is a single module.

This section describes the case in which a circuit configured in a way that two or more rechargeable battery modules are connected in series and more than two of such circuits are connected in parallel. Regarding two or more modules connected in series as one single module, the above circuit can be regarded as such two or more such single module is connected in parallel.

All of the constant current and constant voltage power supplies for charging rechargeable battery cells are generally so far non-isolated power supplies, however isolated power supplies may also be used. In the case of non-isolated power supplies, the output negative terminal and input negative terminal are at the same electrical potential. If an isolated power supply is used and the cathodes of multiple power supplies are coupled, the anode of the power supply should also be connected to the corresponding power supply.

## Claims

1. A rechargeable battery cell voltage equalisation device comprising;
a battery pair comprising at least two rechargeable battery cells connected in series,
switched capacitors connected in parallel for each of said rechargeable battery cells,
a mono-directional current switch connected in series therewith,
a charge current limiting circuit subsequently connected thereto,
an equilisation circuit comprising a charge over-voltage detection limiting circuit, and
a charging power supply connected to said switched capacitors.

2. The equalization device as claimed in claim 1 operates by means of said switched capacitors and a charge current limiting circuit and charge over-voltage detection limiting circuit subsequently connected thereto, and automatically equalises voltages of all rechargeable battery cells series-connected in a plurality of battery pair rechargeable battery cells connected in a series in a self-sustaining manner.

3. The rechargeable battery cell voltage equalisation device as claimed in claim 1 or claim 2, wherein said switched capacitors may be configured either as a single-phase circuit or as an n-phase circuit with the circuit phases separated into n phases and number of circuit phases may be the same or different for each connected rechargeable battery cell.

4. The rechargeable battery cell voltage equalisation device as claimed in claim 1, 2 or 3, wherein any of said rechargeable battery cell or all rechargeable battery cells are replaced with capacitors.

5. The rechargeable battery cell voltage equalisation device as claimed in claims 1 to 4, wherein a mono-directional current switch for the direction from the rechargeable battery bypassing charge current limit circuit and said charge overvoltage detection limiting circuit to the switched capacitor is added.

6. The rechargeable battery cell voltage equalisation device as claimed in claims 1 to 5, wherein said charge overvoltage detection limiting circuit is removed.

7. The rechargeable battery cell voltage equalisation device as claimed in claims 1 to 6, wherein all positive outputs of the power supplies for charging in the respective rechargeable battery modules are interconnected and all negative outputs are interconnected when at least two or more rechargeable battery modules are connected in series.
